# EUROPEAN PATENT SPECIFICATION

(11) **EP 0 325 146 B1**
(45) Date of publication and mention of the grant of the patent: **22.03.1995**
(21) Application number: 89100342.8
(22) Date of filing: 10.01.1989
(51) Int. Cl.: C08G 59/06, C08G 59/22, C09D 163/00, E04C 5/00

(54) **Use of solid epoxy resins for powder coating composition for metal reinforcing bars and a method for coating metal reinforcing bars therewith**
Verwendung von festen Epoxidharzen als Pulverbeschichtungszusammensetzung für Armierungsmetallstäbe und Verfahren zur Beschichtung von Armierungsmetallstäbe damit
Utilisation de résine époxyde solide comme composition de revêtement sous forme de poudre pour des barres métalliques de renforcement et procédé de revêtement de ces barres avec lesdites compositions

(30) Priority: 19.01.1988 US 145350
(43) Date of publication of application: 26.07.1989
(73) Proprietor: THE DOW CHEMICAL COMPANY, Midland Michigan 48640-1967 (US)
(72) Inventor: Lampton, Robert D., Jr., Lake Jackson Texas 77566 (US); Tyler, Manuel C., Jr., Angleton Texas 77515 (US)
(74) Representative: Sternagel, Hans-Günther, Dr.

(56) References cited:
- WO-A-87/02043
- GB-A- 1 527 258
- GB-A- 2 022 592
- GB-A- 2 167 071

## Description

The present invention concerns the use of an epoxy resins for powder coating compositions for metal reinforcing bars.

In WO 87/102043 a powder coating composition containing a solid epoxy resin is described which has an average epoxide functionallity per molecule of greater than 2 and a solid curing agent for the epoxy resin. The solid epoxy resin is a multifunctional polyglycidyl ether of a bisphenol compound or a multifunctional polyglycidyl ether of a polyglycol advanced in molecular weight with bisphenol compounds. These coating compositions are particularly useful for coating metallic substrates.

From GB-A-2 167 071 a solvent based advanced epoxy resin prepared by reacting in the presence of a suitable catalyst (A) a composition comprising (1) at least one aliphatic diepoxide and (2) at least one aromatic diepoxide, with (B) at least one compound leaving two aromatic hydroxyl groups per molecule wherein components (A-1) and (A-2) employed in quantities such that from 10 to 50 percent of the epoxide equivalents contained in component (A) are contributed by component (A-1), from 50 to 90 percent of such epoxide equivalents are contributed by component (A-2) and wherein components (A) and (B) are employed in quantities such that the resultant advanced epoxy resin has an average epoxide equivalent weight of from 350 to 30.000 is known.

GB-A-1 527 258 refers to a process for the preparation of a solid polyepoxide having high stability and transformable into a mobile liquid epoxy resin ester by reacting with a fatty acid, characterized by bringing into contact:
A) a diglycidyl ether of bisphenol-A
B) a diglycidyl ether of polyoxyethylene-glycol.
C) bisphenol-A;
the amount of the B component being of from 5 to 20 parts by weight for every 100 parts by weight of the sum of the A and B components and the amount of the C component being of from 10 to 30 parts by weight for every 100 parts by weight of the said sum, and the reaction being carried out at a temperature of from 140° to 200°C, until constant, or approximately constant, epoxy equivalent values are obtained in the resulting polyepoxide.

Metal reinforcing bars are coated so as to prevent corrosion in a normal service environment, particularly in exterior structures such as highways and bridges. Current compositions involve a curing agent based on methylene dianiline which is becoming more highly regulated by federal agencies. The coating industry is therefore seeking alternative coating compositions for reinforcing bars which do not contain methylene dianiline. The replacement formulation must meet certain property criteria such as excellent low temperature flexibility and impact resistance, preferably at high filler loadings.

The present invention pertains the use of a solid epoxy resin having an epoxy equivalent weight from 1200 to 2400 and being prepared by reacting:
(1) a mixture of diepoxides containing
   (a) at least one aromatic diepoxide which is a diglycidyl ether of any of resorcinol, catechol, hydrochinone, bisphenol A, bisphenol F, bisphenol K, and bisphenol S, and
   (b) at least one aliphatic diepoxide, wherein from 70 to 95 percent of the epoxide groups in the mixture are contributed by the aromatic diepoxide and from 30 to 5 percent of the epoxide groups are contributed by the aliphatic diepoxide; with
(2) a compound having two aromatic hydroxyl groups per molecule which is any of hydroquinone, catechol, hydroquinone, bisphenol A, bisphenol F or bisphenol S
for corrosion-resistant powder coating compositions that obtain good low temperature flexibility and impact resistance without methylene dianiline.

The use is particularly for powder coating compositions further comprising
(i) as a curing agent for the solid epoxy resin a curing amount of a compound having an average more than one phenolic hydroxyl group per molecule;
(ii) as an accelerator for the curing agent, an accelerating amount of a tertiary amine or an adduct of a secondary amine with a diglycidyl ether of a compound having two phenolic hydroxyl groups per molecule;
(iii) one or more fillers, pigments or dyes; and
(iv) one or more flow modifiers.

Another aspect of the present invention pertains to a process for coating metal reinforcing bars with the aforementioned powder coating.

Suitable aromatic diepoxides include those described by P. H. Martin in U S-A-3,391,109. Particularly Suitable aromatic diepoxides include the diglycidyl ethers of resorcinol, catechol, hydroquinone, bisphenol A, bisphenol F, bisphenol K, and bisphenol S. Mixtures of aromatic diepoxides can also be employed if desired.

Suitable aliphatic diepoxides which can be employed herein include those described by Hickner et al in U S-A-4,608,313. Particularly suitable aliphatic diepoxides include the diglycidyl ethers of propylene glycol, dipropylene glycol, tripropylene glycol and polyoxypropylene diols having an EEW up to 400. Mixtures of aliphatic diepoxides can also be employed if desired.

The aromatic diepoxides and aliphatic diepoxides are employed in quantities such that in the mixture thereof suitably from 70 to 95, more suitably from 75 to 95, most suitably from 80 to 95, percent of the epoxide groups are contributed by the aromatic diepoxide and suitably from 30 to 5, more suitably from 25 to 5, most suitably from 20 to 5, percent of the epoxide groups are contributed by the aliphatic diepoxide.

Suitable compounds containing two aromatic hydroxyl groups per molecule which can be employed herein include those described by the aforementioned Hickner et al in U S-A-4,608,313. Particularly suitable compounds containing two aromatic hydroxyl groups per molecule include, for example, catechol, hydroquinone, bisphenol A, bisphenol F, bisphenol K, and bisphenol S. Mixtures of these aromatic hydroxyl containing compounds can also be employed if desired.

The compounds containing two aromatic hydroxyl groups per molecule are employed in quantities which provide the resultant advanced epoxy resin with an epoxide equivalent weight (EEW) from 1200 to 2400, more suitably from 1600 to 2000.

Suitable solid epoxy resin curing agents which can be employed herein include, for example polyhydric phenols such as those described in in U S-A-4,322,456. Particularly suitable curing agents include, for example, that prepared by reacting an excess of bisphenol A with a diglycidyl ether of bisphenol A. The resultant product is terminated in phenolic hydroxyl groups.

The curing agent is employed in a functionally equivalent amount which is that amount which is sufficient to cure the epoxy resin at the curing conditions employed. Particularly suitable amounts of curing agent are suitably from 5 to 25, more suitably from 5 to 20, most suitably from 7 to 14 percent by weight based upon the weight of the epoxy resin.

Suitable accelerators for the curing agents which can be employed herein include, for example, tertiary amines and adducts of secondary amines and diglycidyl ethers of compounds having two phenolic hydroxyl groups per molecule. Suitable secondary amines include, for example, imidazole, 2-methylimidazole, 2-methylimidazoline, 2-ethylimidazole, 2-ethylimidazoline and combinations thereof. Suitable diglycidyl ethers of compounds having two phenolic hydroxyl groups per molecule include the diglycidyl ethers of resorcinol, catechol, hydroquinone, bisphenol A, bisphenol F, bisphenol K, dihydroxy biphenyl, and combinations thereof. Particularly suitable accelerators include, for example, an adduct of a secondary amine and an epoxy resin commercially available from Shell Chemical Company as EPON™ P-101.

The accelerator is employed in a functionally equivalent amount which is that amount which is sufficient to accelerate the cure of the epoxy resin at the curing conditions employed. Particularly suitable amounts of accelerator are from 1 to 20, more suitably from 1 to 10, and most suitably from 1 to 8 percent by weight based upon the weight of the epoxy resin.

Suitable fillers which can be employed herein include, for example, metal oxides, metal sulfates, metal carbonates, metal silicates, and silica. Particularly suitable fillers include, for example, barium sulfate, calcium carbonate, titanium dioxide, calcium meta silicate, iron oxide, mica, and any combination thereof.

Suitable dyes or pigments which can be employed herein include, for example, metal oxides, organo metallic compounds and any of those described in the National Paint and Coatings Association's Raw Materials Index for Pigments. Particularly suitable dyes or pigments include, for example, chrome oxide, titanium dioxide, iron oxide, phthalocyanine green and blue, and any combination thereof.

The combined amount of fillers, pigment or dyes which can be employed herein is suitably from 0.5 to 30, more suitably from 0.5 to 25, most suitably from 0.5 to 20 percent by weight based upon the weight of the total powder coating formulation.

The powder coating compositions of the present invention can be applied to the reinforcing bars by any conventional means such as spraying the powder coating onto the preheated metal, or passing the preheated reinforcing bar through a fluidized bed of the coating powder.

The coatings are cured by the residual heat of the reinforcing bar at temperatures suitably from 130°C to 300°C, more suitably from 180°C to 250°C, most suitably from 220°C to 250°C for a time sufficient to cure the coating, suitably from 5 to 60, more suitably from 5 to 30, most suitably from 5 to 15 seconds.

Suitable reinforcing bar materials include steel.

The present invention will further be described with reference to the following examples.

The following materials were employed in the Examples.

Aromatic Epoxy Resin A is a diglycidyl ether of bisphenol A having an EEW of 1822.

Aromatic Epoxy Resin B is the epoxy resin resulting from reacting 788.9 g (4.173 epoxide equiv.) of a mixture containing 10 weight percent of a diglycidyl ether of polypropylene glycol having an EEW of 315 and 90 weight percent of a diglycidyl ether of bisphenol A having an EEW of 181 with 406.9 g (3.569 aromatic hydroxyl equiv.) of bisphenol A. The resultant advanced epoxy resin has an EEW of 1792.

Aromatic Epoxy Resin C is the epoxy resin resulting from reacting 893.9 g (4.518 epoxide equiv.) of a mixture containing 20 weight percent of a diglycidyl ether of polypropylene glycol having an EEW of 315 and 80 weight percent of a diglycidyl ether of bisphenol A having an EEW of 181 with 438.2 g (3.844 aromatic hydroxyl equiv.) of bisphenol A. The resultant advanced epoxy resin has an EEW of 1827.

Aromatic Epoxy Resin D is the epoxy resin resulting from reacting 934.1 g (4.612 epoxide equiv.) of a mixture containing 25 weight percent of a diglycidyl ether of polypropylene glycol having an EEW of 315 and 75 weight percent of a diglycidyl ether of bisphenol A having an EEW of 181 with 446 g (3.912 aromatic hydroxyl equiv.) of bisphenol A. The resultant advanced epoxy resin has an EEW of 1947.

Aromatic Epoxy Resin E is a blend of 25 weight percent of an epoxy novolac modified diglycidyl ether of bisphenol A epoxy resin having an EEW of 804 and 75 weight percent of Aromatic Epoxy Resin A. The blend has an EEW of 1384.

### PREPARATION OF COATING FORMULATIONS

The coating formulations were prepared by dry blending all of the components followed by melt mixing in a Buss Condux PKL-46 extruder at a temperature of 90°C and a screw speed of 120 rpm resulting in a residence time in the extruder of about 20 seconds. The extrudate was ground and sieved through an 80 mesh screen having openings of 0.1778 mm (0.0070 inch).

### PREPARATION OF COATED BARS

The powder coating formulation was applied to 25.4 mm x 25.4 mm x 3.175 mm (1 in. x 8 in. x 1/8 in.) mild steel bars containing a 2 mil NACE near white finish. The bars were preheated to 232°C for 30 minutes, dipped into an Armstrong Model B fluidized bed containing the powder to achieve a 6-8 mil coating thickness, post baked at 232°C for 5 minutes, and subsequently water quenched.

The following tests were performed on the coating compositions or coated bars.

### GEL TIMES

The stroke cure gel time indicates the relative reactivity of a powder coating formulation at a specific temperature and is usually expressed as the number of seconds to reach gelation. Determinations were made using a Thermo-Cure (Thermo Electric Co.) hot plate. Gel points were indicated when a spatula no longer provided a polymer thread.

### IMPACT

The 3.175 mm (1/8 in.) thick coated bars were forward impacted at ambient temperature with a Gardner Impact Tester and checked for cracking at the rims of the indentations. The reported values were the highest impacts at which the coatings did not contain cracks. The maximum reading the tester reached was 18.08 J (160 in-lbs).

### FLEXIBILITY

Three bars for each formulation were chilled and stabilized at the desired temperature. The bars were removed from the cold box one at a time, placed in a vice, and the vice jaws closed onto their top and bottom edges. The bars were bent to a 180 degree angle in 30 seconds by closing the vice. The bent specimens were visually checked for cracks. Unless otherwise noted, the cracks were small (less than 3.175 mm (1/8 in.,)) in length and the substrate could not be seen through the coating.

The coating formulations are given in Table I and the test results are given in Table II.

**TABLE I**

| | Formulation Designation | | | | |
|---|---|---|---|---|---|
| | A* | B | C | D | E* |
| Resin, Type pbw¹ | A | B | C | D | E |
| | 69.2 | 69.2 | 69.2 | 69.2 | 66.5 |
| Hardener², pbw¹ | 4.9 | 4.9 | 4.9 | 4.9 | 6.25 |
| Accelerator³_{,} pbw¹ | 4.9 | 4.9 | 4.9 | 4.9 | 6.25 |
| Flow Modifier⁴ | 1.0 | 1.0 | 1.0 | 1.0 | 1.0 |
| Barium Sulfate, pbw¹ | 10.0 | 10.0 | 10.0 | 10.0 | 10.0 |
| Calcium Carbonate, pbw¹ | 7.0 | 7.0 | 7.0 | 7.0 | 7.0 |
| Titanium Dioxide, pbw¹ | 3.0 | 3.0 | 3.0 | 3.0 | 3.0 |

| | | | | | |
|---|---|---|---|---|---|
| *Not an example of the invention. | | | | | |
| ¹Pbw is parts by weight. | | | | | |
| ²The hardener is the bisphenol A terminated adduct of bisphenolA and a diglycidyl ether of bisphenol A. | | | | | |
| ³The Accelerator is EPON™ P-101 commercially available from Shell Chemical. | | | | | |
| ⁴The flow modifier is Acrylron MFP available from Synthron. | | | | | |

**TABLE II**

| | Formulation Designation | | | | |
|---|---|---|---|---|---|
| | A* | B | C | D | E* |
| Gel Time @ 232°C,sec. | 9 | 8 | 11 | 11 | 7 |
| Impact, In-lbs J | 60 | 100 | 160 | 160 | 80 |
| | 6.78 | 11.3 | 18.08 | 18.08 | 9.04 |

| Flexibility, No.of Cracks | | | | | |
|---|---|---|---|---|---|
| @ -18°C, | 3^{a} | 1 | 0 | 0 | 4^{b} |
| @ -30°C, | 5^{a} | 1 | 0 | 0 | 6^{b} |

| | | | | | |
|---|---|---|---|---|---|
| *Not an example of the invention. | | | | | |
| ^{a}Cracked complete width of bar. | | | | | |
| ^{b}Several of the cracks gap to the point where the substrate can be seen. | | | | | |

## Claims

1. Use of a solid epoxy resin having an epoxy equivalent weight from 1200 to 2400 and being prepared by reacting:
(1) a mixture of diepoxides containing
(a) at least one aromatic diepoxide which is a diglycidyl ether of any of resorcinol, catechol, hydrochinone, bisphenol A, bisphenol F, bisphenol K, and bisphenol S, and
(b) at least one aliphatic diepoxide, wherein from 70 to 95 percent of the epoxide groups in the mixture are contributed by the aromatic diepoxide and from 30 to 5 percent of the epoxide groups are contributed by the aliphatic diepoxide; with
(2) a compound having two aromatic hydroxyl groups per molecule which is any of hydroquinone, catechol, bisphenol A, bisphenol F or bisphenol S
for corrosion-resistant powder coating compositions.

2. Use as described in Claim 1,
wherein from 80 to 95 percent of the epoxide groups in the mixture are contributed by the aromatic diepoxide and from 20 to 5 percent of the epoxide groups are contributed by the aliphatic diepoxide.

3. Use as described in any of the preceding Claims,
wherein the solid epoxy resin has an epoxy equivalent weight form 1600 to 2000.

4. Use as described in any of the preceding Claims,
wherein the aliphatic diepoxide is a diglycidyl ether of any of: propylene glycol, dipropylene glycol, tripropylene glycol, or polyoxypropylene diols whose epoxy equivalent weight of the aliphatic diepoxide is no more than 400.

5. Use as described in any of the preceding Claims,
wherein the powder coating composition further comprising
(i) as a curing agent for the solid epoxy resin a curing amount of a compound having an average more than one phenolic hydroxyl group per molecule;
(ii) as an accelerator for the curing agent, an accelerating amount of a tertiary amine or an adduct of a secondary amine with a diglycidyl ether of a compound having two phenolic hydroxyl groups per molecule;
(iii) one or more fillers, pigments or dyes; and
(iv) one or more flow modifiers.

6. Use as described in Claim 5 wherein:
(1) the weight of curing agent in the composition is from 5 to 25 percent of the weight of solid epoxy resin in the composition; and
(2) the weight of accelerator in the composition is from 1 to 20 weight percent of the weight of epoxy resin in the composition.

7. Use as decribed in any of Claims 5 or 6,
wherein the combined amount of fillers, pgiments or dyes in the powder coating composition is 0,5 to 30 weight percent of the entire composition.

8. A method for coating a metal reinforcing bar, wherein a powder coating composition as decribed in any of claims 5 to 7 is applied to a preheated metal reinforcing bar and for a time suitable to provide a cured coating.

9. A method as described in Claim 8,
wherein the temperature is 130°C to 300°C, and the bar contains steel.

## Patentansprüche

1. Verwendung eines festen Epoxyharzes mit einem Epoxyäquivalentgwicht von 1200 bis 2400, das hergestellt wurde durch Umsetzen von
(1) einer Mischung von Diepoxiden, enthaltend
(a) mindestens ein aromatisches Diepoxid, das ein Diglycidylether von einem von Resorcin, Brenzcatechin, Hydrochinon, Bisphenol A, Bisphenol F, Bisphenol K und Bisphenol S ist, und
(b) mindestens ein aliphatisches Diepoxid, wobei von 70 bis 95 % der Epoxidgruppen in der Mischung vom aromatischen Diepoxid und von 30 bis 5 % der Epoxidgruppen vom aliphatischen Diepoxid stammen, mit
(2) einer Verbindung von zwei aromatischen Hydroxylgruppen pro Molekül, die eine von Hydrochinon, Brenzcatechin, Bisphenol A, Bisphenol F oder Bisphenol S ist, für korrosionsbeständige Pulverbeschichtungszusammensetzungen.

2. Verwendung nach Anspruch 1,
**dadurch gekennzeichnet,**
daß von 80 bis 95 % der Epoxidgruppen in der Mischung vom aromatischen Diepoxid und von 20 bis 5 % der Epoxidgruppen in der Mischung vom aliphatischen Diepoxid stammen.

3. Verwendung nach einem der vorstehenden Ansprüche,
**dadurch gekennzeichnet**,
daß das feste Epoxyharz ein Epoxyäquivalentgewicht von 1600 bis 2000 aufweist.

4. Verwendung nach einem der vorstehenden Ansprüche,
**dadurch gekennzeichnet**,
daß das aliphatische Diepoxid ein Diglycidylether ist von einem von Propylenglycol, Dipropylenglycol, Tripropylenglycol oder Polyoxypropylendiolen, deren Epoxyäquivalentgewicht des aliphatischen Diepoxids nicht mehr als 400 beträgt.

5. Verwendung nach einem der vorstehenden Ansprüche,
**dadurch gekennzeichnet**,
daß die Pulverbeschichtungszusammensetzung weiterhin enthält
( i) eine härtende Menge einer Verbindung mit im Mittel mehr als einer phenolischen Hydroxylgruppe pro Molekül als ein Härtungsmittel für das feste Epoxyharz,
( ii) eine beschleunigende Menge eines tertiären Amins oder eines Addukts eines sekundären Amins mit einem Diglycidylether einer Verbindung mit zwei phenolischen Hydroxylgruppen pro Molekül als Beschleuniger für das Härtungsmittel,
(iii) einen oder mehrere Füllstoffe, Pigmente oder Farbstoffe und
( iv) einen oder mehrere Fließhilfsmittel.

6. Verwendung nach Anspruch 5,
**dadurch gekennzeichnet, daß**
(1) das Gewicht des Härtungsmittel in der Zusammensetzung von 5 bis 25 % des Gewichts des festen Epoxyharzes in der Zusammensetzung beträgt, und
(2) das Gewicht des Beschleunigers in der Zusammensetzung von 1 bis 20 Gew.-% des Gewichts des Epoxyharzes in der Zusammensetzung beträgt.

7. Verwendung nach einem der Ansprüche 5 oder 6,
**dadurch gekennzeichnet,**
daß die kombinierte Menge von Füllstoffen, Pigmenten oder Farbstoffen in der Pulverbeschichtungszusammensetzung 0,5 bis 30 Gew.-%, bezogen auf die Gesamtzusammensetzung, beträgt.

8. Verfahren zum Beschichten eines verstärkenden Metallstabes durch Aufbringen einer Pulverbeschichtungszusammensetzung nach einem der Ansprüche 5 bis 7 auf einen vorerwärmten, verstärkenden Metallstab und für eine zum Erzeugen einer gehärteten Beschichtung ausreichende Zeit.

9. Verfahren nach Anspruch 8,
**dadurch gekennzeichnet,**
daß die Temperatur 130° C bis 300° C beträgt und der Stab Stahl enthält.

## Revendications

1. Utilisation d'une résine époxy solide, ayant un équivalent époxyde de 1200 à 2400, qui est préparée par réaction de:
(1) un mélange de diépoxydes contenant:
(a) au moins un diépoxyde aromatique, qui est un éther diglycidyligue de l'un quelconque des composés résorcinol, catéchol, hydroquinone, bisphénol A, bisphénol F, bisphénol K et bisphénol S, et
(b) au moins un diépoxyde aliphatique, de 70 à 95% des groupes époxydes du mélange étant apportés par le diépoxyde aromatique et de 30 à 5% des groupes époxydes étant apportés par le diépoxyde aliphatique, avec
(2) un composé présentant deux groupes hydroxyles aromatiques par molécule, qui est l'un quelconque des composés hydroquinone, catéchol, bisphénol A, bisphénol F et bisphénol S,
pour des compositions de revêtement sous forme de poudre, résistant à la corrosion.

2. Utilisation selon la revendication 1, pour laquelle de 80 à 95% des groupes époxydes du mélange sont apportés par le diépoxyde aromatique et de 20 à 5% des groupes époxydes sont apportés par le diépoxyde aliphatique.

3. Utilisation selon l'une quelconque des revendications précédentes, pour laquelle la résine époxy solide a un équivalent époxyde de 1600 à 2000.

4. Utilisation selon l'une quelconque des revendications précédentes, pour laquelle le diépoxyde aliphatique est un éther diglycidylique de propylèneglycol, de dipropylèneglycol, de tripropylèneglycol ou d'un polyoxypropylènediol, l'équivalent époxyde dudit diépoxyde aliphatique ne dépassant pas 400.

5. Utilisation selon l'une quelconque des revendications précédentes, pour laquelle la composition de revêtement sous forme de poudre comprend en plus:
(i) en tant qu'agent de durcissement pour la résine époxy solide, une quantité durcissante d'un composé ayant en moyenne plus d'un groupe hydroxyle phénolique par molécule,
(ii) en tant qu'accélérateur pour l'agent de durcissement, une quantité accélérante d'une amine tertiaire ou d'un produit d'addition d'une amine secondaire et d'un éther diglycidylique d'un composé présentant deux groupes hydroxyles phénoliques par molécule,
(iii) une ou plusieurs charges, pigments ou colorants, et
(iv) un ou plusieurs agents de modification de l'écoulement.

6. Utilisation selon la revendication 5, pour laquelle:
(1) le poids de l'agent de durcissement dans la composition représente 5 à 25% du poids de résine époxy solide dans la composition, et
(2) le poids d'accélérateur dans la composition représente 1 à 20% en poids du poids de résine époxy dans la composition.

7. Utilisation selon l'une quelconque des revendications 5 et 6, pour laquelle la quantité combinée de charges, pigments ou colorants dans la composition de revêtement sous forme de poudre, représente 0,5 à 30% en poids de la composition entière.

8. Procédé de revêtement d'une barre métallique de renforcement,dans lequel on applique une composition de revêtement sous forme de poudre, telle que définie dans l'une quelconque des revendications 5 à 7, à une barre métallique de renforcement, préchauffée, et on la durcit pendant un temps suffisant pour l'obtention d'un revêtement durci.

9. Procédé selon la revendication 8, dans lequel la température est de 130°C à 300°C, et la barre contient de l'acier.
